# FASCICULE DE BREVET EUROPEEN

(11) **EP 2 607 770 B1**
(45) Date de publication et mention de la délivrance du brevet: **04.06.2014**
(21) Numéro de dépôt: 12199067.5
(22) Date de dépôt: 21.12.2012
(51) Int. Cl.: F16L 37/107, F16L 37/28, F16L 37/248, F16L 37/113, F16L 37/252, F16L 37/34, F16L 55/10

(54) **Raccord destiné à réaliser la jonction amovible de deux canalisations de fluide**
Anschlussstück zur Ausführung einer abnehmbaren Verbindung zwischen zwei Flüssigkeitskanalisationen
Connector for performing the detachable connection of two fluid pipelines

(30) Priorité: 23.12.2011 FR 1162416
(43) Date de publication de la demande: 26.06.2013
(73) Titulaire: STÄUBLI FAVERGES, 74210 Faverges (FR)
(72) Inventeur: Tiberghien, Alain-Christophe, 74320 Sevrier (FR); Durieux, Christophe, 73200 Gilly-sur-Isère (FR); Marques Barroca, Sérafim, 73460 Frontenex (FR)
(74) Mandataire: Myon, Gérard Jean-Pierre

(56) Documents cités:
- EP-A1- 1 862 719
- EP-A1- 2 141 402
- DE-A1-102007 062 393
- US-A- 5 056 560

## Description

La présente invention concerne un raccord destiné à réaliser la jonction amovible de deux canalisations de fluide.

Un raccord comporte classiquement un premier élément et un deuxième élément complémentaires, que l'on raccorde en les emboîtant l'un dans l'autre. Les premier et deuxième éléments sont raccordés chacun à une canalisation. Le premier et/ou le deuxième élément sont généralement pourvus d'une soupape d'obturation qui est manoeuvrée vers une position ouverte lorsqu'on emboîte les deux éléments. Après cet emboîtement, les deux canalisations sont jointes et le fluide peut s'écouler de l'une à l'autre.

Pour certaines applications, le raccord présente des risques d'arrachement. Par exemple, si l'un des éléments du raccord est relié à un véhicule et l'autre à une citerne fixe, le véhicule est susceptible de s'éloigner de la citerne lorsque le remplissage est en cours et que les deux éléments du raccord sont emboités. Dans ce cas, les éléments de la chaîne de remplissage, et en particulier les éléments du raccord, risquent de s'altérer et le produit transvasé risque de se déverser dans l'environnement ambiant.

EP-A-1 862 719 divulgue un raccord qui comprend un élément femelle composé d'un corps, d'une bague de verrouillage montée rotative autour du corps femelle et d'une bague de sécurité montée autour de la bague de verrouillage. La bague de verrouillage est pourvue de deux rainures de verrouillage en forme de « L » avec une portion axiale et une portion circonférentielle qui coopèrent avec des pions de l'élément mâle du raccord de manière à réaliser une fixation de type à baïonnette. Deux rainures de sécurité sont ménagées dans la bague de sécurité. Les pions de l'élément mâle sont suffisamment longs pour traverser les rainures de la bague de verrouillage et coopérer avec les rainures de la bague de sécurité. Les rainures de sécurité comportent une portion d'entrée, inclinée par rapport à l'axe longitudinal de l'élément femelle, et une portion d'extrémité parallèle à cet axe qui verrouille circonférentiellement les pions dans la bague de verrouillage en configuration accouplée du raccord. En cas d'arrachement accidentel, la bague de sécurité est déplacée à l'opposé de l'élément mâle et vient directement au contact des pions de l'élément mâle, entraînant automatiquement une rotation de la bague de sécurité et de la bague de verrouillage dans un sens qui permet de libérer l'accouplement à baïonnette entre l'élément mâle et la bague de verrouillage. De cette manière, le raccord se déconnecte automatiquement et ne risque pas de s'endommager. Une fois déconnecté, des soupapes des éléments mâle et femelle empêchent le fluide de se répandre.

Toutefois, ce raccord risque de ne pas fonctionner correctement dans toutes les conditions, notamment lorsque le raccord est utilisé pour transférer de l'azote liquide, c'est-à-dire à très basse température. En effet, du givre a tendance à se former dans le raccord, entre l'élément mâle et la bague de verrouillage ainsi qu'entre les deux bagues. Par conséquent, en cas d'arrachement, les efforts générés sont insuffisants pour rompre le givre. Ainsi, le raccord ne se déconnecte pas automatiquement et il risque de s'endommager. De plus, ce raccord est relativement complexe et coûteux à fabriquer car l'élément femelle comporte deux bagues.

C'est à ces inconvénients qu'entend plus particulièrement remédier l'invention en proposant un raccord pouvant se déconnecter automatiquement en cas d'arrachement, en particulier lorsque du givre s'est formé dans le raccord et bloque le mouvement relatif des éléments du raccord.

A cet effet, l'invention a pour objet un raccord pour la jonction amovible de deux canalisations de fluide, le raccord s'étendant longitudinalement le long d'un axe et comprenant un premier élément et un deuxième élément propres à s'emboîter l'un dans l'autre, le premier élément comprenant un corps délimitant un canal de passage de fluide qui s'étend axialement, l'un au moins parmi le premier élément et le deuxième élément étant équipé d'une soupape et d'un organe élastique de rappel de la soupape en position d'étanchéité, chaque soupape assurant l'étanchéité fluidique de l'élément lorsque le raccord est en configuration désaccouplée et laissant le fluide s'écouler dans le canal lorsque le raccord est en configuration accouplée. Le deuxième élément et le corps sont liés, lorsque le deuxième élément et le premier élément sont emboités au moins partiellement l'un dans l'autre, selon un mouvement relatif combiné de rotation et de translation, selon l'axe, par une première liaison entre au moins un pion de verrouillage et au moins une rainure de verrouillage qui comprend une portion d'entrée et une portion de verrouillage. Le corps adopte, dans la configuration accouplée du raccord, une position axiale de verrouillage par rapport au deuxième élément. La première liaison est, d'une part, telle que le corps dépasse sa position axiale de verrouillage par rapport au deuxième élément pour engager le pion de verrouillage dans la portion de verrouillage de la rainure de verrouillage au cours de l'accouplement et, d'autre part, apte à verrouiller axialement le deuxième élément par rapport au corps du premier élément lorsque le raccord est en configuration accouplée et que le pion de verrouillage coopère avec la portion de verrouillage, l'organe élastique de rappel de chaque soupape s'opposant alors au rapprochement axial entre le deuxième élément et le corps. Le premier élément comprend une unique bague montée autour du corps, le corps et la bague étant liés selon un mouvement relatif combiné de rotation et de translation selon l'axe par une deuxième liaison entre au moins un pion de guidage et au moins une rainure de guidage. Lorsque le deuxième élément et le premier élément sont emboités au moins partiellement l'un dans l'autre, le deuxième élément et la bague sont mobiles en translation et liés en rotation l'un par rapport à l'autre selon l'axe. Lorsque le pion de verrouillage coopère avec la portion de verrouillage de la rainure de verrouillage en configuration accouplée du raccord, le pion de guidage est disposé dans la rainure de guidage. Lorsque le raccord est dans la configuration accouplée et que la bague est déplacée par rapport au corps selon l'axe, à l'opposé du deuxième élément, le raccord adopte une configuration intermédiaire d'accouplement, dans laquelle le pion de verrouillage est disposé hors de la portion de verrouillage de la rainure de verrouillage.

Grâce à l'invention, le déplacement de la bague permet de déverrouiller automatiquement les deux éléments de raccord en cas d'arrachement accidentel, en particulier lorsque du givre est intercalé entre ces deux éléments, puisque le nombre de constituants du raccord est limité et que l'actionnement se fait à distance des contacts soumis au givre. Par une action sur la bague dans une direction opposée au deuxième élément, le corps du premier élément est entraîné en direction du deuxième élément, à l'encontre des efforts élastiques des soupapes, avec le pion de verrouillage qui progresse hors de la portion de verrouillage de la rainure de verrouillage. De plus, le raccord de l'invention est de conception simple, le deuxième élément ne comprend qu'une seule bague. Ainsi, le raccord est relativement simple à fabriquer et peu coûteux.

Selon des aspects avantageux mais non obligatoires de l'invention, un tel raccord peut incorporer une ou plusieurs des caractéristiques techniques suivantes, prises dans toutes combinaisons techniquement admissibles :
- Un premier angle entre, d'une part, un axe géométrique d'une première portion de la rainure de guidage dans laquelle est disposé le pion de guidage en configuration accouplée du raccord et, d'autre part, un premier plan qui passe par l'axe, qui s'étend selon une direction radiale par rapport à l'axe et qui coupe la première portion de la rainure de guidage, est inférieur d'au moins 15°, de préférence de 45°, à un deuxième angle entre, d'une part, un axe géométrique de la portion de verrouillage de la rainure de verrouillage et, d'autre part, un deuxième plan, qui passe par l'axe, s'étend selon une direction radiale par rapport à l'axe et coupe la portion de verrouillage de la rainure de verrouillage.
- Le premier angle est compris entre 20° et 40°.
- Lorsque le raccord est en configuration désaccouplée et que le premier élément est dans une configuration rétractée, dans laquelle la bague est reculée axialement par rapport au corps, à l'opposé de l'extrémité distale du corps, le pion de guidage est disposé dans la rainure de guidage.

- Chaque rainure de guidage comprend également une deuxième portion inclinée par rapport à l'axe avec laquelle le pion de guidage coopère en configuration désaccouplée du raccord. Un troisième angle entre, d'une part, un axe géométrique de la deuxième portion de la rainure de guidage et, d'autre part, le premier plan, est compris entre la valeur du premier angle et 80°, de préférence égal à 60°.
- Lorsque le pion de guidage coopère avec la première portion de la rainure de guidage, le corps a atteint ou dépasse sa position axiale de verrouillage par rapport au deuxième élément.
- Le pion de verrouillage est ménagé sur une surface radiale interne d'une partie distale du corps du premier élément.
- Le pion de guidage est ménagé sur une surface radiale interne d'une partie proximale de la bague.
- Le corps porte à la fois les pions de guidage et les pions de verrouillage.
- Le corps comporte une butée qui limite le mouvement axial de la bague à l'opposé d'une extrémité distale du corps.
- Un élément de rappel élastique est intercalé axialement entre le corps du premier élément et la bague. L'élément élastique est apte à repousser la bague contre la butée.
- Le corps comporte une butée qui limite le mouvement axial de la bague en direction d'une extrémité distale du corps.
- La bague est pourvue de tenons. Le deuxième élément est pourvu d'encoches. Lorsque le premier élément et le deuxième élément sont emboités au moins partiellement l'un dans l'autre, les encoches coopèrent avec les tenons, ce qui bloque la rotation, autour de l'axe, du deuxième élément par rapport à la bague.
- La bague est pourvue de trous qui mettent en communication une surface externe du corps avec l'extérieur du raccord.
- Le corps du premier élément est formé d'un corps interne définissant un canal pour le fluide et d'un corps principal coaxiaux et solidaires. Le deuxième élément est formé d'un corps interne définissant un passage pour le fluide et d'un corps principal coaxiaux et solidaires. La liaison entre le pion de verrouillage et la rainure de verrouillage est réalisée au niveau des corps principaux, les corps internes et les corps principaux du premier et du deuxième élément étant séparés par un espace annulaire.
- Au moins un câble relie la bague à la canalisation du premier élément. Au moins une partie de la canalisation du premier élément non parallèle à l'axe. Le câble est accroché sur la canalisation du côté opposé au premier élément par rapport à la partie de la canalisation non parallèle à l'axe X-X'.

L'invention sera bien comprise et d'autres aspects de celle-ci apparaitront plus clairement à la lumière de la description qui va suivre de trois raccords conformes à l'invention, donnée uniquement à titre d'exemple et faite en référence aux dessins annexés dans lesquels :
- la figure 1 est une vue en perspective sur laquelle sont représentés séparément, d'une part, un corps et une bague faisant partie d'un premier élément d'un raccord conforme à l'invention et, d'autre part, un deuxième élément du même raccord ;
- la figure 2 est une vue de côté du raccord de la figure 1 dans une configuration initiale d'accouplement d'un premier élément du raccord avec un deuxième élément du raccord ;
- la figure 3 est une coupe axiale du raccord de la figure 2 ;
- les figures 4, 5 et 6 sont des vues latérales du raccord, respectivement dans une configuration intermédiaire d'accouplement, en configuration accouplée et dans une configuration intermédiaire de désaccouplement ;
- la figure 7 est une vue développée du détail VII à la figure 2, montrant uniquement le deuxième élément du raccord ;
- la figure 8 est une vue développée du détail VIII à la figure 2, montrant uniquement le premier élément du raccord ;
- la figure 9 est une coupe axiale d'un raccord conforme à un deuxième mode de réalisation de l'invention, en configuration accouplée ;
- la figure 10 est une vue de côté d'un raccord conforme à un troisième mode de réalisation de l'invention, en configuration accouplée ; et
- la figure 11 est une coupe axiale du raccord de la figure 10.

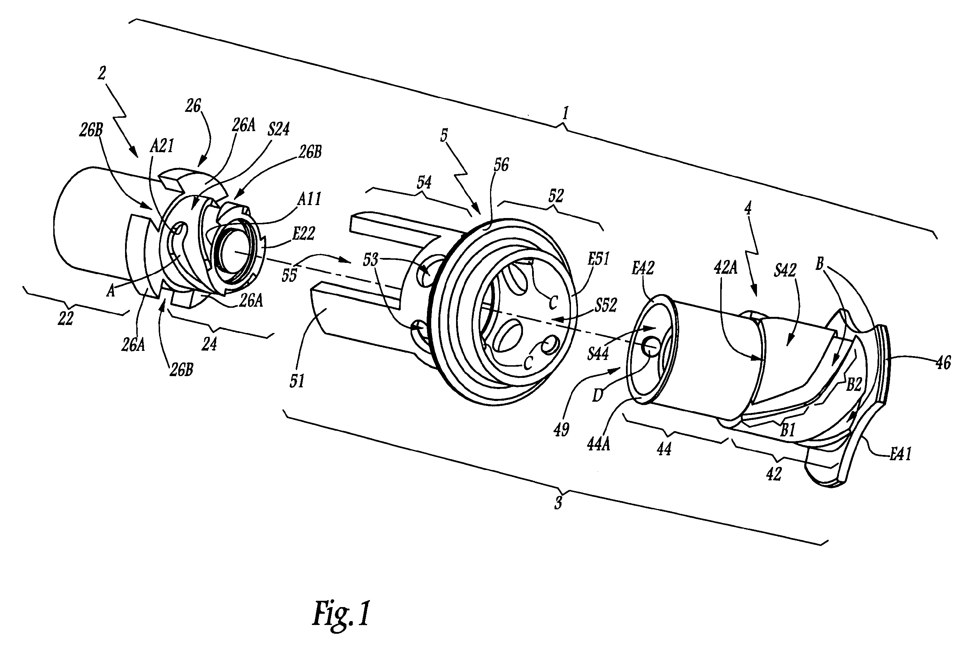

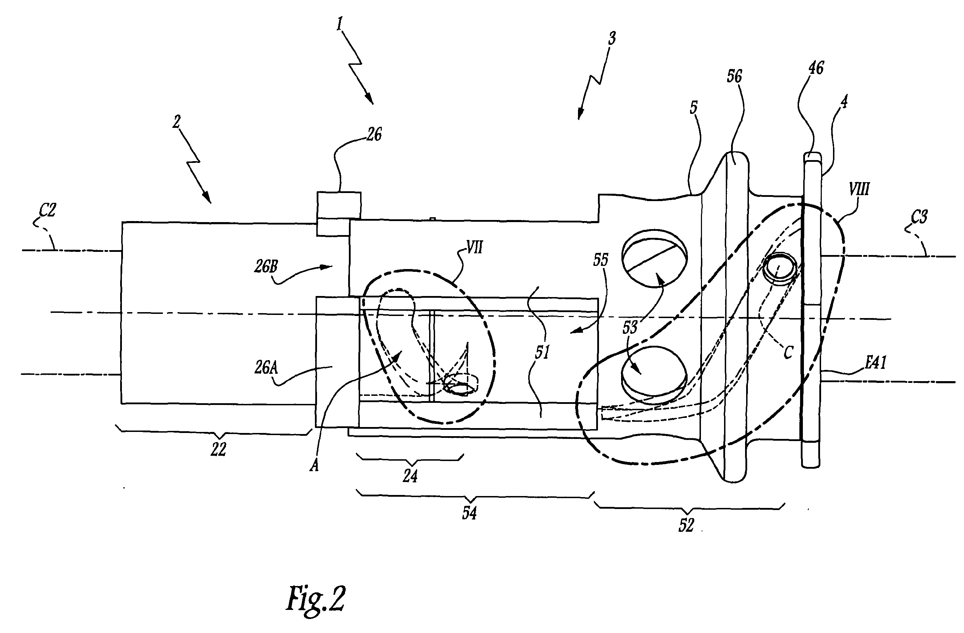

Les figures 1 à 8 montrent un raccord 1 comprenant un embout 3 constituant un premier élément du raccord et conformé en élément femelle ainsi qu'un about 2 constituant un deuxième élément du raccord 1 et conformé en élément mâle. L'embout 3 comprend un corps 4 et une unique bague 5 montée autour du corps 4 avec possibilité de mouvement relatif. Lorsque l'about 2 et l'embout 3 sont emboîtés l'un dans l'autre, ils s'étendent le long d'un axe longitudinal X-X'. L'axe X-X' constitue également un axe de révolution pour l'about 2, le corps 4 et la bague 5. L'about 2 est relié à une canalisation de fluide C2, représentée en traits mixtes aux figures 2 à 6, et l'embout 3 est relié à une canalisation de fluide C3, également représentée en traits mixtes aux figures 2 à 6.

Une surface est ici qualifiée de « radiale » ou d'« axiale » selon l'orientation d'une normale à cette surface. De plus, une surface radiale est qualifiée « d'interne » si elle est tournée vers l'axe X-X', et « d'externe » si elle est tournée dans le sens opposé. L'adjectif « proximal » désigne un élément d'une pièce proche de la canalisation C2 ou C3 à laquelle est reliée cette pièce, tandis que l'adjectif « distal » désigne un élément qui en est plus éloigné.

L'about 2 comporte un corps principal formé d'une portion proximale 22 reliée à la canalisation C2 et une portion distale 24. Une collerette 26 externe et radiale s'étend, le long de l'axe X-X', entre les portions 22 et 24. La collerette 26 est crantée, elle comporte trois ailes 26A séparées entre elles par des encoches 26B. Chaque encoche 26B présente deux bords parallèles s'étendant le long de l'axe X-X' et délimitant les côtés de l'encoche 26B. L'about 2 définit un passage 20 longitudinal à travers lequel peut s'écouler un fluide, par exemple de l'azote liquide.

Le corps 4 comprend une portion proximale 42 et une portion distale 44, ainsi qu'une collerette d'actionnement 46 qui constitue une extrémité proximale E41 du corps 4. Le corps 4 délimite un canal 30 de passage du fluide et comporte une ouverture ou embouchure 49 distale, de forme complémentaire à la portion distale 24 de l'about 2, de façon à recevoir l'about 2. Le passage 20, l'ouverture 49 et le canal 30 s'étendent longitudinalement le long de l'axe X-X'. Le corps 4 est monté libre en rotation autour de l'axe X-X', par rapport à la canalisation C3.

La portion distale 24 de l'about 2 loge une soupape 23 qui obture le passage 20 lorsque le raccord 1 est en configuration désaccouplée. La soupape 23 est repoussée par défaut contre son siège 21 en position d'étanchéité au moyen d'un ressort 25. Un premier joint torique 27A est monté dans une gorge radiale externe du siège 21 de la soupape 23 et un autre joint torique 27B est monté dans une gorge radiale interne ménagée au niveau d'une extrémité distale E22 de l'about 2, tournée vers l'embout 3 en cours d'accouplement.

De la même manière, le corps 4 loge une soupape 43 destinée à obturer le canal 30 lorsque le raccord 1 est désaccouplé. La soupape 43 est repoussée par défaut contre son siège 41 en position d'étanchéité au moyen d'un ressort 45. Un joint torique 47 est monté dans une gorge radiale externe de la soupape 43.

Les joints toriques 27A, 27B et 47 assurent l'étanchéité fluidique de l'about 2 et de l'embout 3 lorsque le raccord 1 est en configuration désaccouplée.

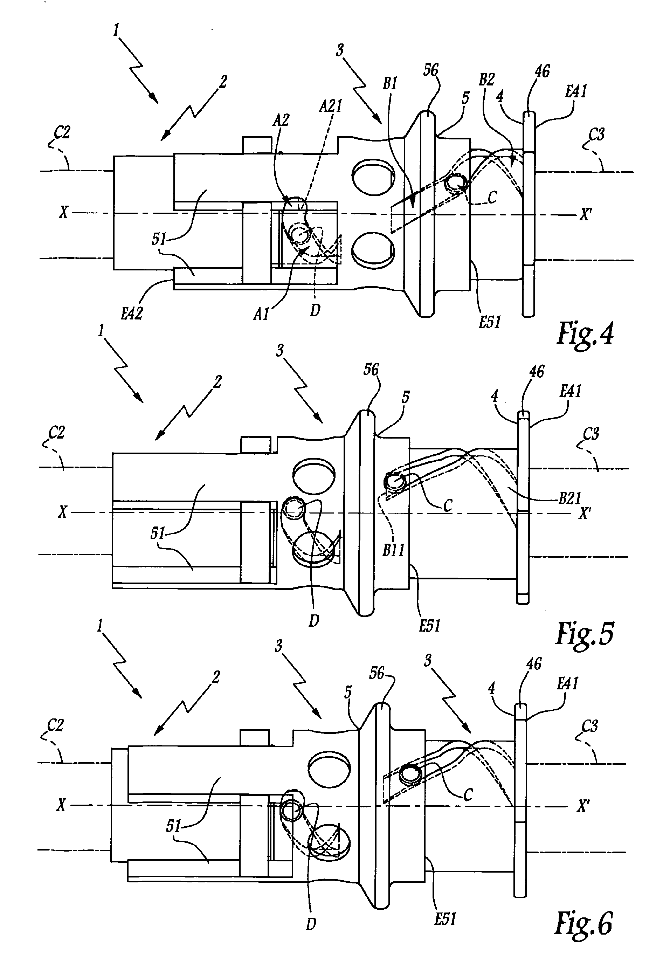

Dans la configuration accouplée du raccord 1, illustrée à la figure 5, l'extrémité distale E22 de l'about 2 repousse la soupape 43 hors de son siège 41, à l'encontre d'un effort élastique de fermeture exercé par le ressort 45. De la même manière, une extrémité distale du corps 4, sur laquelle est ménagé le siège 41, repousse la soupape 23 hors de son siège 21, à l'encontre d'un effort élastique de fermeture exercé par le ressort 25. Le fluide peut alors s'écouler depuis la canalisation C3 amont vers la canalisation C2 aval, à travers le canal 30 et le passage 20. Les termes amont et aval font référence au sens de l'écoulement du fluide depuis la canalisation C3 vers la canalisation C2. L'autre sens d'écoulement est également envisageable, les termes relatifs amont et aval sont alors inversés.

L'about 2 comporte trois rainures de verrouillage A identiques qui sont ménagées sur une surface radiale externe S24 de la portion distale 24 et qui présentent une répartition angulaire uniforme sur la circonférence de cette surface. Chaque rainure de verrouillage A comporte une portion d'entrée A1 et une portion de verrouillage A2. La portion d'entrée A1 de chaque rainure de verrouillage A présente une entrée A11 et débouche au niveau de l'extrémité distale E22 de l'about 2. L'extrémité de la portion de verrouillage A2 de chaque rainure de verrouillage A, opposée à l'entrée A11, forme une extrémité fermée A21 de la rainure de verrouillage A.

Un épaulement 42A axial et externe est formé entre les portions 42 et 44 du corps 4, le diamètre externe de la portion distale 44 étant inférieur au diamètre externe de la portion proximale 42.

La portion proximale 42 du corps femelle comporte trois rainures externes de guidage B identiques qui présentent une répartition angulaire uniforme sur la circonférence d'une surface radiale externe S42 de la portion proximale 42. Chaque rainure de guidage B comprend une portion distale B1 et une portion proximale B2 adjacente à la collerette d'actionnement 46. L'extrémité distale B11 de la portion distale B1 de chaque rainure de guidage B débouche au niveau de l'épaulement 42A. L'extrémité proximale B21 de la portion proximale B2 de chaque rainure de guidage B est fermée par la collerette 46.

Une extrémité distale E42 du corps 4, qui est tournée vers l'about 2 en cours d'accouplement, est pourvue de trois pions de verrouillage D cylindriques internes qui s'étendent radialement et sont répartis avec un espacement angulaire régulier sur la circonférence d'une surface radiale interne S44 de la portion distale 44. Lors de l'emboîtement de l'about 2 dans l'embout 3, les pions de verrouillage D coopèrent avec les rainures de verrouillage A de l'about 2.

La bague 5 est montée autour du corps 4 et comprend une portion proximale 52 et une portion distale 54. La portion proximale 52 est prolongée radialement vers l'extérieur par une collerette d'actionnement 56 dont le diamètre externe est supérieur à celui des portions 52 et 54. Des ouvertures circulaires 53 sont percées radialement dans la portion proximale 52 de la bague 5 et mettent en communication la surface radiale externe S42 du corps 4 avec l'atmosphère à l'extérieur du raccord 1.

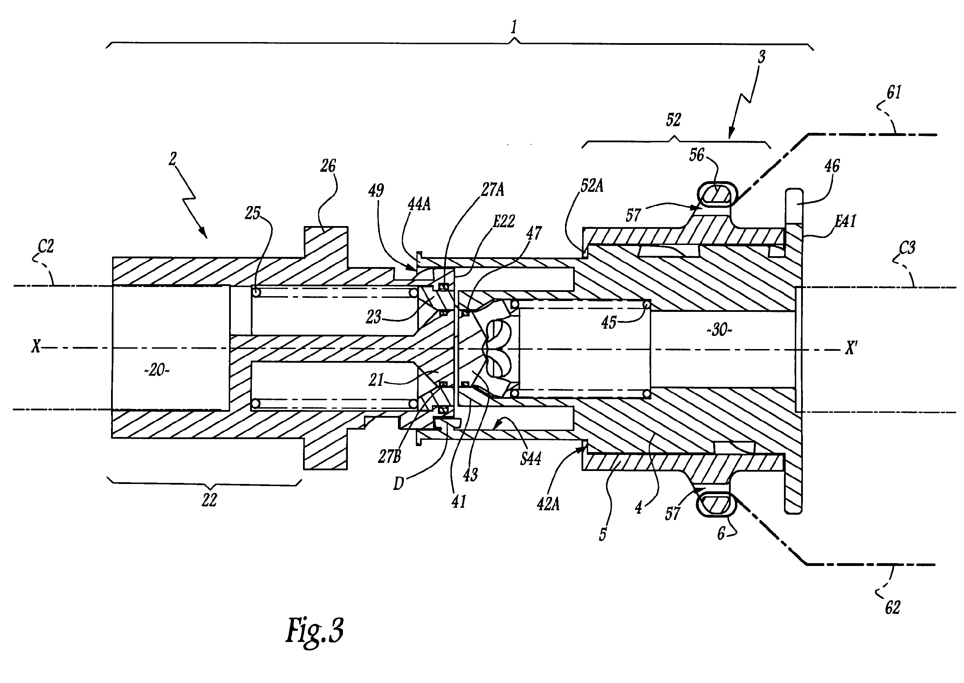

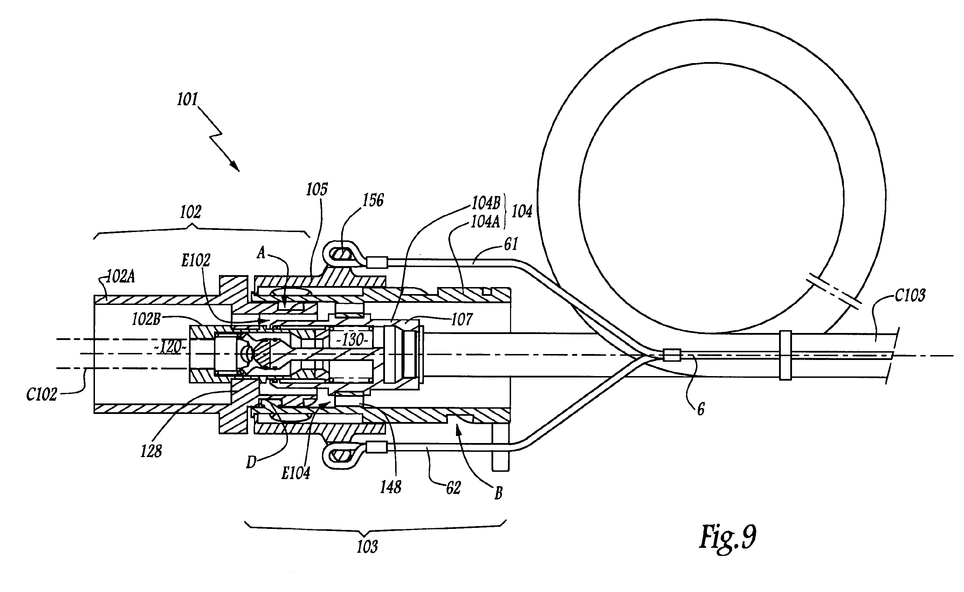

Un câble 6, représenté uniquement sur le raccord 101 de la figure 9 mais étant installé de manière analogue sur le raccord 1, relie la collerette d'actionnement 56 de la bague 5 à la canalisation C3. Le câble 6 se divise en deux portions de câble 61 et 62, accrochées chacune à un trou 57 qui traverse axialement la collerette 56. Les trous 57 sont opposés diamétralement pour répartir les efforts de traction transmis par le câble 6. A la figure 3, les portions 61 et 62 du câble 6 sont représentées par leur trace, en traits mixtes.

La portion distale 54 comporte trois tenons 51 qui s'étendent axialement et qui sont séparés entre eux par des encoches 55. Chaque tenon 51 présente deux bords longitudinaux parallèles. A proximité d'une extrémité proximale E51 de la bague 5, la surface radiale interne S52 de la portion proximale 52 est pourvue de trois pions de guidage C cylindriques qui s'étendent radialement et sont répartis uniformément angulairement sur la circonférence de la surface radiale interne S52.

L'extrémité distale de la portion proximale 52 de la bague 5 est prolongée radialement vers l'intérieur par une collerette annulaire 52A, visible à la figure 3, prévue pour buter axialement contre l'épaulement 42A du corps 4 lorsque la bague 5 est reculée au maximum vers la canalisation C3, par rapport au corps 4.

L'extrémité distale E42 du corps 4 est prolongée radialement vers l'extérieur par une collerette annulaire 44A.

En configuration assemblée de l'embout 3, c'est-à-dire lorsque la bague 5 est montée autour du corps 4, les pions de guidage C de la bague 5 sont logés dans les rainures de guidage B du corps 4 et la collerette annulaire 52A de la bague 5 est retenue axialement entre la collerette annulaire 44A et l'épaulement 42A du corps 4. La bague 5 et le corps 4 sont ainsi solidaires, c'est-à-dire qu'ils ne peuvent pas se désolidariser, et ils sont liés selon un mouvement relatif combiné de rotation, autour de l'axe X-X', et de translation, le long de l'axe X-X', c'est-à-dire que la bague 5 se déplace axialement selon l'axe X-X' par rapport au corps 4 en même temps qu'elle se déplace en rotation autour de l'axe X-X' par rapport au corps 4. Ce mouvement est défini par la géométrie des rainures de guidage B avec lesquelles les pions de guidage C sont en liaison.

Aux figures 2, 4, 5 et 6 et dans la description qui suit, pour plus de clarté et pour simplification, seule une rainure de verrouillage A, une rainure de guidage B, un pion de guidage C et un pion de verrouillage D sont représentés et décrits, sachant que chacune des trois rainures A et B et chacun des pions C et D sont semblables à ceux représentés et décrits. Les arêtes cachées de ces éléments A, B, C et D sont représentées en pointillés pour montrer leur géométrie.

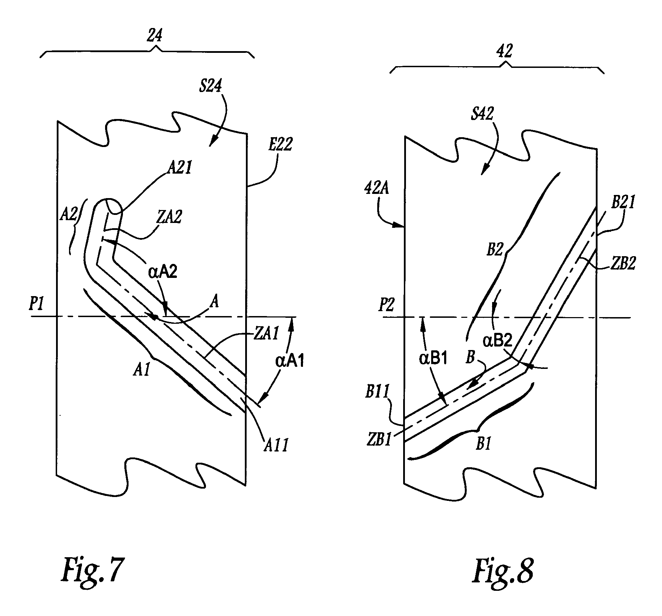

Dans la vue développée de la figure 7, on note ZA1, l'axe géométrique central de la portion d'entrée A1 de la rainure de verrouillage A. L'axe ZA1 est rectiligne. On note αA1, l'angle saillant entre l'axe ZA1 et un plan P1 qui s'étend selon une direction radiale par rapport à l'axe X-X' et coupe la portion d'entrée A1 de la rainure de verrouillage A au niveau de ses deux bords. Dans la vue de la figure 7, le plan P1 est perpendiculaire à la surface radiale externe développée S24 de la portion distale 24 de l'about 2. La portion A1 de la rainure de verrouillage A est rectiligne, autrement dit, l'angle αA1 est constant le long de la portion A1. L'angle αA1 est égal à 60°. Il peut être compris entre 40° et 80°.

L'angle αA1 est défini entre, d'une part, la partie de l'axe ZA1 disposée du côté de l'entrée A11 par rapport au plan P1 et, d'autre part, la partie de plan P1 disposée du côté de l'extrémité distale E22 par rapport à l'axe ZA1.

Dans la vue développée de la figure 7, on note ZA2, l'axe géométrique central de la portion de verrouillage A2 de la rainure de verrouillage A. L'axe ZA2 est rectiligne. On note αA2, l'angle saillant entre l'axe ZA2 et le plan P1. La portion A2 de la rainure de verrouillage A est rectiligne, autrement dit, l'angle αA2 est constant le long de la portion A2.

L'angle αA2 est défini entre, d'une part, la partie de l'axe ZA2 disposée du côté de l'entrée A11 par rapport au plan P1 et, d'autre part, la partie de plan P1 disposée du côté de l'extrémité distale E22 par rapport à l'axe ZA2. L'angle αA2 est égal à 75°. Sa valeur peut être comprise entre 35° et 85°. L'axe ZA2 présente une composante circonférentielle perpendiculaire au plan P1 et une composante axiale parallèle à l'axe X-X'. Dans le sens de la progression du pion de verrouillage D dans la rainure de verrouillage A, c'est-à-dire dans un sens allant de l'entrée A11 vers l'extrémité fermée A21 de la rainure de verrouillage A, la portion de verrouillage A2 s'étend en direction de l'extrémité distale E22 de l'about 2, à l'opposé de la canalisation C2 car l'angle αA2 est strictement inférieur à 90°.

Dans la vue développée de la figure 8, on note ZB1 l'axe géométrique central de la portion distale B1 de la rainure de guidage B. On note αB1 l'angle saillant entre l'axe ZB1 et un plan P2 qui s'étend selon une direction radiale par rapport à l'axe X-X' et coupe la portion distale B1 de la rainure de guidage B au niveau de ses deux bords. La portion distale B1 de la rainure de guidage B est rectiligne, autrement dit, l'angle αB1 est constant le long de la portion B1.

L'angle αB1 est défini entre, d'une part, la partie de l'axe ZB1 disposée du côté de l'extrémité distale B11 de la portion distale B1 par rapport au plan P2 et, d'autre part, la partie de plan P2 disposée du côté de l'extrémité distale E42 par rapport à l'axe ZB1.

L'angle αB1 est égal à 30°. L'angle αB1 est compris entre 20° et 60°. Pour assurer un fonctionnement optimal du raccord 1, l'angle αB1 est inférieur à 40° et strictement inférieur à l'angle αA2. En fait, la différence entre l'angle αB1 et l'angle αA2 est supérieure aux angles du cône de frottement d'adhérence, considérés, pour l'un, au niveau des contacts entre le corps 4 et l'about 2 et, pour l'autre, au niveau des contacts entre le corps 4 et la bague 5. Cette différence est comprise entre 15° et 60°, de préférence encore égale à 45°. Par contacts entre le corps 4 et l'about 2, on entend les contacts entre les pions de verrouillage D et les bords des rainures de verrouillage A. Par contacts entre le corps 4 et la bague 5, on entend les contacts entre les pions de guidage C et les bords des rainures de guidage B. L'angle du cône de frottement d'adhérence dépend essentiellement du couple de matériaux en contact et de leurs états de surface. Pour exemple, dans le cas d'un contact acier/acier cet angle est de l'ordre de 11 °.

Dans la vue développée de la figure 8, on note ZB2 l'axe géométrique central de la portion proximale B2 de la rainure de guidage B. On note αB2 l'angle saillant entre l'axe ZB2 et le plan P2. La portion B2 de la rainure de guidage B est rectiligne, autrement dit, l'angle αB2 est constant le long de la portion B2.

L'angle αB2 est défini entre, d'une part, la partie de l'axe ZB2 disposée du côté de l'extrémité distale B11 de la portion distale B1 par rapport au plan P2 et, d'autre part, la partie de plan P2 disposée du côté de l'extrémité distale E42 par rapport à l'axe ZB2.

L'angle αB2 est égal à 60°. L'angle αB2 est compris entre la valeur de l'angle αB1 et 80°.

Le rapprochement de l'about 2 et de l'embout 3 est réalisé au moyen d'une translation de l'embout 3 par rapport à l'about 2, selon l'axe X-X'.

Avant l'accouplement et jusqu'à une position initiale d'accouplement représentée aux figures 2 et 3, l'embout 3 est en configuration rétractée. Dans cette configuration, la bague 5 est reculée axialement au maximum par rapport au corps 4, à l'opposé de l'extrémité distale E42 du corps 4. La collerette annulaire 52A de la bague 5 bute contre l'épaulement 42A du corps 4.

Au début de l'accouplement du raccord 1, on introduit l'extrémité distale E22 de l'about 2 dans l'ouverture 49 et on insère les tenons 51 de la bague 5 dans les encoches 26B de la collerette 26 de l'about 2. Les encoches 26B de la collerette 26 coopèrent avec les tenons 51, ce qui bloque la rotation, autour de l'axe X-X', de la bague 5 par rapport à l'about 2. Plus précisément, les bords longitudinaux parallèles des tenons 51 coulissent contre les bords longitudinaux des encoches 26B, parallèlement à l'axe X-X'. Grâce à la mobilité en rotation du corps 4 par rapport à la canalisation C3, il est aisé de positionner angulairement de manière correcte la bague 5 par rapport à l'about 2. La position angulaire relative de l'about 2 par rapport à l'embout 3 en configuration rétractée, définie par la coopération des encoches 26B avec les tenons 51, permet l'engagement du pion de verrouillage D du corps 4 dans l'entrée A11 de la rainure de verrouillage A de l'about 2.

La bague 5 est alors mobile uniquement en translation, selon l'axe X-X', par rapport à l'about 2 puisque la bague 5 est liée en rotation autour de l'axe X-X' avec l'about 2.

L'opérateur agit indifféremment sur le corps 4, en l'entraînant en rotation, ou sur la bague 5, en l'entraînant en translation vers l'about 2, pour accoupler les éléments 2 et 3 puisque la bague 5 et le corps 4 sont liés selon un mouvement combiné relatif de rotation et de translation.

Le pion de verrouillage D progresse dans la portion d'entrée A1 de la rainure de verrouillage A. Cette liaison entre le pion de verrouillage D et la rainure de verrouillage A entraîne un mouvement combiné de rotation et de translation du corps 4 par rapport à l'about 2. Or, d'une part, la bague 5 et le corps 4 sont liés selon un mouvement relatif combiné de rotation et de translation et, d'autre part, la bague 5 est bloquée en rotation par rapport à l'about 2. Ainsi, le corps 4 et la bague 5 progressent simultanément, le long de l'axe X-X', en direction de l'about 2 avec le pion de guidage C qui progresse dans la portion proximale B2 de la rainure de guidage B, en direction de l'extrémité distale B11 de la rainure de guidage B et les tenons 51 qui restent engagés dans les encoches 26B.

La figure 4 montre le raccord 1 dans une configuration intermédiaire d'accouplement, dans laquelle le pion de guidage C est situé au niveau de la jonction entre les portions B1 et B2 de la rainure de guidage B. Dans cette configuration du raccord 1, le pion de verrouillage D est au niveau de l'extrémité proximale de la portion d'entrée A1 des rainures de verrouillage A, juste avant la jonction entre les portions A1 et A2.

La figure 5 montre le raccord 1 en configuration accouplée. L'embout 3 est dans une configuration déployée. Le pion de guidage C est disposé dans la portion distale B1 de la rainure de guidage B, à proximité de l'extrémité distale B11 de la rainure de guidage B. La progression axiale de la bague 5 vers l'about 2 est bloquée avec la mise en butée du pion de verrouillage D contre l'extrémité fermée A21 de la rainure de verrouillage A.

Quelle que soit la position de la bague 5 par rapport au corps 4, les pions de guidage C sont décalés axialement par rapport aux pions de verrouillage D et les pions de guidage C sont plus proches de l'extrémité proximale E41 du corps 4 que les pions de verrouillage D.

Dans la configuration intermédiaire d'accouplement (figure 4), le corps 4 a déjà atteint sa position axiale de verrouillage par rapport à l'about 2. Autrement dit, la position axiale du corps 4 par rapport à l'about 2, le long de l'axe X-X', est identique dans la configuration intermédiaire d'accouplement (figure 4) et dans la configuration accouplée (figure 5).

Entre la configuration intermédiaire d'accouplement (figure 4) et la configuration accouplée (figure 5) du raccord 1, les tenons 51 restent en prise avec les encoches 26B et le corps 4 effectue un mouvement combiné de rotation et de translation par rapport à l'about 2 avec le pion de guidage C qui progresse dans la portion distale B1 de la rainure de guidage B. La translation de ce mouvement combiné s'effectue, dans un premier temps, en direction de l'about 2 puis, à l'opposé de l'about 2. Le corps 4 effectue ainsi un mouvement axial de va-et-vient par rapport à l'about 2 depuis sa position axiale de verrouillage qu'il dépasse en direction de l'about 2 pour atteindre une position axiale de surcourse maximale, représentée en figure 6, pour revenir ensuite vers sa position axiale de verrouillage, dans laquelle le raccord 1 est en configuration accouplée et le pion de verrouillage D est en prise avec la portion de verrouillage A2. Ce mouvement de va-et-vient combiné au mouvement de rotation du corps 4 par rapport à l'about 2 est provoqué par la liaison entre les pions de verrouillage D et les rainures de verrouillage A. Le mouvement de recul du corps 4 par rapport à l'about 2 depuis sa position de surcourse maximale est causé par l'engagement du pion de verrouillage D dans la portion de verrouillage A2 de la rainure de verrouillage A : dans le sens de progression du pion de verrouillage D dans la portion de verrouillage A2, lors de l'accouplement du raccord 1, la portion de verrouillage A2 est orientée en direction de l'extrémité distale E22 de l'about 2.

Comme représenté pour le raccord 101 de la figure 9, la canalisation C3 du raccord 1 forme une spire, de manière à permettre ce mouvement de va-et-vient ainsi qu'un mouvement limité d'accompagnement de l'about 2 par le corps 4 en cas d'arrachement alors que le raccord 1 est accouplé. Le câble 6 est accroché sur la canalisation C3 en amont de la spire, c'est-à-dire du côté opposé à l'embout 3 par rapport à la spire. Le câble 6 est sensiblement tendu lorsque le raccord 1 est dans la configuration accouplée. En variante, le câble 6 ne forme pas une spire mais est disposé selon une autre forme non rectiligne selon l'axe X-X', par exemple un zig-zag. Le câble 6 comprend alors au moins une partie non parallèle à l'axe X-X'. De la même manière, le câble 6 est alors accroché sur la canalisation du côté opposé au premier élément par rapport à une partie de la canalisation non parallèle à l'axe X-X'.

Dans la configuration accouplée, les soupapes 23 et 43 sont repoussées hors de leur siège 21 et 41 respectif et le fluide s'écoule dans le canal 30 et le passage longitudinal 20. De plus, dès le début de l'accouplement, les efforts élastiques des ressorts 25 et 45 s'opposent au rapprochement axial entre l'about 2 et le corps 4. Cela a pour effet de maintenir le pion de verrouillage D dans la portion de verrouillage A2 de la rainure de verrouillage A, dès que le pion de verrouillage D coopère avec la portion de verrouillage A2 et que l'opérateur cesse d'agir sur le raccord pour l'accouplement, et de plaquer le pion de verrouillage D contre l'extrémité fermée A21. Du fait de l'orientation de la portion de verrouillage A2, depuis l'extrémité proximale de la portion d'entrée A1, en direction de l'extrémité distale E22 de l'about 2, la coopération entre le pion de verrouillage D et l'extrémité fermée A21 de la portion de verrouillage A2 verrouille le mouvement relatif de l'about 2 par rapport au corps 4 axialement, c'est-à-dire selon un mouvement d'éloignement parallèle à l'axe X-X', et circonférentiellement, c'est-à-dire s'oppose à un mouvement relatif de rotation autour de l'axe X-X', en configuration accouplée du raccord 1.

Le pion de guidage C et la rainure de guidage B ne sont pas soumis aux efforts de verrouillage dans la configuration accouplée du raccord 1.

Pour désaccoupler l'about 2 hors de l'embout 3 dans des conditions normales de désaccouplement, un opérateur entraîne axialement la bague 5 par rapport au corps 4 dans une direction opposée à l'about 2. Cet effort de désaccouplement plaque le pion de guidage C contre un bord de la portion distale B1 de la rainure de guidage B.

La portion distale B1 de la rainure de guidage B étant inclinée de l'angle αB1, l'effort de contact entre le pion de guidage C et la portion distale B1 de la rainure de guidage B génère un effort circonférentiel de déverrouillage sur le corps 4 à partir de l'effort axial de désaccouplement. Du fait de l'orientation de la portion distale B1 et de la différence d'angle entre αB1 et αA2, cet effort circonférentiel provoque une rotation du corps 4 par rapport à la bague 5 et par rapport à l'about 2, avec le pion de guidage C qui progresse en direction de l'extrémité proximale B21 en contact avec la rainure de guidage B, et le pion de verrouillage D qui progresse hors de la portion de verrouillage A2 vers la portion d'entrée A1 de la rainure de verrouillage A, avec un mouvement d'avance du corps 4 vers sa position de surcourse maximale en direction de l'about 2 (figure 6) puis un recul du corps 4.

Le raccord atteint la configuration intermédiaire de désaccouplement illustrée en figure 4, dans laquelle le pion de verrouillage D est disposé hors de la portion de verrouillage A2 et la bague 5 a été déplacée axialement depuis sa position en configuration accouplée du raccord vers la canalisation C3, à l'opposé de l'about 2.

L'embout 3 est ensuite complètement extrait dans un mouvement inverse au mouvement d'accouplement. Le pion de guidage C progresse au contact d'un des bords longitudinaux de la portion proximale B2 de la rainure de guidage B. L'effort circonférentiel généré et les efforts des ressorts 25 et 45 des soupapes 23 et 43 entraînent le pion de verrouillage D hors de la portion d'entrée A1 de la rainure de verrouillage A et hors de l'about 2. Le raccord 1 revient dans la configuration désaccouplée et l'embout 3 se retrouve de nouveau en configuration rétractée. Les soupapes 21 et 41 sont repoussées contre leur siège 23 ou 43 et assurent l'étanchéité des canalisations C2 et C3. L'embout 3 est disponible pour une nouvelle connexion automatique.

En alternative, pour désaccoupler l'about 2 hors de l'embout 3, si beaucoup de givre s'est formé entre les éléments du raccord 1, l'opérateur agit sur la collerette d'actionnement 46 et fait tourner le corps 4 par rapport à la bague 5, dans un sens qui tend à amener l'embout 3 dans la configuration rétractée. Le mouvement de rotation initié par l'opérateur provoque le déverrouillage de l'about 2 par rapport au corps 4 avec la sortie du pion de verrouillage D hors de la portion de verrouillage A2 de la rainure de verrouillage A, avec le pion de guidage C qui progresse dans la rainure de guidage B, en direction de l'extrémité proximale B21.

Lorsque le raccord 1 est en position accouplée et que l'embout 3 et l'about 2 sont éloignés l'un de l'autre, par exemple si le véhicule auquel est relié l'about 2 s'éloigne de la canalisation C3, le corps 4 accompagne le mouvement de l'about 2 du fait de la géométrie en spire de la canalisation C3, tandis que la bague 5 ne peut pas être entrainée axialement avec le corps 4 car le câble 6 la retient. Le câble 6 crée sur la bague 5 un effort de retenue. La bague 5 se déplace selon l'axe X-X' relativement au corps 4 depuis sa position en configuration accouplée du raccord 1 et en direction de sa position en configuration désaccouplée du raccord 1, à l'opposé de l'about 2, et le pion de guidage C de la bague 5 entre alors en contact avec un bord de la portion distale B1 de la rainure de guidage B.

Pour permettre le désaccouplement automatique du raccord 1 en cas d'arrachement accidentel, il a été choisi une différence d'angle entre αB1 et αA2 qui est supérieure aux angles du cône de frottement d'adhérence. Ainsi, l'effort axial de retenue de la bague 5, qui éloigne la bague 5 de l'about 2, appliqué au niveau du contact entre le pion de guidage C et la portion distale B1, induit un effort circonférentiel au niveau du contact entre le pion de verrouillage D et la portion de verrouillage A2 qui fait tourner le corps 4 par rapport à l'about 2 et donc par rapport à la bague 5 et qui fait progresser le corps 4 en direction de l'about 2, à l'encontre des efforts élastiques des soupapes 23 et 43. Le pion de verrouillage D progresse alors dans la portion de verrouillage A2 depuis sa position verrouillée vers la portion d'entrée A1 et dans la portion d'entrée A1 en direction de l'entrée A11 jusqu'à ce que le raccord soit désaccouplé. L'angle αB1 de la portion B1 de la rainure de guidage B est inférieur à 40°, ce qui permet d'engendrer un effort circonférentiel relativement important à partir de l'effort axial de retenue. Si l'angle αB1 est trop grand, par exemple supérieur ou égal à 45°, alors l'effort axial de retenue devra être élevé pour générer un effort circonférentiel suffisant pour briser le givre qui peut se former entre les éléments 2, 3 et 4 du raccord et qui bloque les mouvements de l'about 2 par rapport au corps 4. Ce givre ne reste pas coincé entre les éléments 2, 4 et 5 du raccord 1 grâce aux ouvertures 53 qui permettent son évacuation vers l'extérieur du raccord 1.

La rotation du corps 4 générée par l'effort de retenue avec le pion de guidage C qui progresse dans la portion distale B1 de la rainure de guidage B rapproche axialement le corps 4 en direction de l'about 2, ce qui permet au pion de verrouillage D de sortir de la portion de verrouillage A2 de la rainure de verrouillage A. Le corps 4 cesse d'accompagner le mouvement d'éloignement de l'about 2. Le raccord 1 peut se désaccoupler dans un mouvement inverse à celui de l'accouplement. Le pion de verrouillage D sort de la rainure de verrouillage A. La bague 5 est rétractée par rapport au corps 4 jusqu'à venir en butée contre l'épaulement 42A du corps 4, c'est-à-dire dans la configuration rétractée de l'embout 3. Les soupapes 21 et 41 sont repoussées contre leur siège 23 ou 43 et assurent l'étanchéité des canalisations C2 et C3.

Ainsi, depuis la configuration accouplée du raccord 1, un déplacement de la bague 5, à l'opposé de l'about 2, génère un mouvement d'avance du corps 4 en direction de l'about 2 vers sa position de surcourse axiale pour la sortie du pion de verrouillage D hors de la portion de verrouillage A2.

Le déplacement automatique de la bague 5 pour le désaccouplement en cas d'arrachement accidentel est particulièrement adapté aux applications pour lesquelles du givre se forme entre le corps 4 et l'about 2. L'actionnement du corps 4 par la bague 5 se fait en effet au niveau du contact entre le pion de guidage C et la portion distale B1 de la rainure de guidage B, à distance du recouvrement entre l'about 2 et le corps 4, particulièrement soumis au givre, et avec un effort circonférentiel démultiplié. De plus, le raccord 1 ne comprend qu'une seule bague ce qui limite les interfaces de contact où peut se loger le givre et donne une bonne accessibilité pour évacuer le givre vers l'extérieur du raccord 1.

Le désaccouplement automatique du raccord 1 permet de ne pas endommager les éléments 2, 4 et 5 du raccord en cas d'arrachement accidentel, ce qui sécurise le raccord 1 et empêche le fluide de s'écouler dans l'atmosphère.

En variante, lorsque les efforts encaissés par le raccord 1 sont importants, les pions de verrouillage D et/ou les pions de guidage C sont remplacés par des galets.

En variante, le nombre de rainures de guidage A et de pions de guidage C est différent de trois. De la même manière, le nombre de rainures de verrouillage A et de pions de verrouillage D peut être différent de trois. De manière générale, les pions de guidage C ont la même position axiale. Il en est de même pour les pions de verrouillage D.

Dans un autre mode de réalisation de l'invention, le nombre de rainures de guidage A et de pions de guidage C est différent du nombre de rainures de verrouillage A et de pions de verrouillage D.

Dans un autre mode de réalisation de l'invention, les pions C et D et les rainures A et B ne sont pas répartis angulairement de manière régulière sur la circonférence du raccord 1.

En variante, les portions A1, A2, B1 et B2 des rainures A et B ne sont pas rectilignes. Dans ce cas, les rainures A et B sont courbes en vue développée. Les angles αA1, αA2 sont alors mesurés entre le plan P1 et la tangente au niveau des points de contact entre les pions de verrouillage D et les rainures de verrouillage A et les angles αB1 et αB2 sont alors mesurés entre le plan P2 et la tangente au niveau des points de contact entre les pions de guidage C et les rainures de guidage B, la tangente constituant l'axe ZA1, ZA2, ZB1 et ZB2 utilisé pour définir les angles αA1, αA2, αB1 et αB2.

En variante, un élément de rappel élastique, non représenté, est intercalé axialement entre le corps 4 et la bague 5, par exemple entre la collerette annulaire 44A et la collerette annulaire 52A et repousse la bague 5 vers sa position dans la configuration rétractée de l'embout 3. Cet effort élastique est bien inférieur à l'effort de répulsion généré par les ressorts 25 et 45 des soupapes 23 et 43 entre le corps 4 et l'about 2 en configuration accouplée du raccord 1 et ne remet pas en cause la stabilité de la configuration accouplée du raccord 1.

En variante, les pions de guidage C sont portés par le corps 4 et les rainures de guidage B sont ménagées sur la bague 5.

Dans une autre variante, les pions de verrouillage D sont portés par l'about 2 et les rainures de verrouillage B sont portées par le corps 4.

L'about 2 a été décrit comme un élément mâle et l'embout 3 comme un élément femelle mais selon la disposition des pions de verrouillage D et des rainures de verrouillage A sur les deux éléments du raccord, l'embout pourrait être configuré comme un élément mâle et l'about comme un élément femelle.

La figure 9 montre un raccord 101 conforme à un deuxième mode de réalisation de l'invention, comprenant un about 102 et un embout 103. Dans le deuxième mode de réalisation, les éléments similaires à ceux du premier mode de réalisation portent les mêmes références numériques, augmentées de 100. Les éléments du raccord 101 qui sont traversés par le fluide sont éloignés radialement des éléments du raccord 101 qui assurent le verrouillage de l'about 102 dans l'embout 103.

Dans la suite, on ne décrit pas en détail les éléments du raccord 101 qui sont similaires à ceux du raccord 1.

Le raccord 101 comprend un about 102 et un embout 103. L'embout 103 comprend un corps 104 et une bague 105.

L'about 102 comprend un corps principal 102A, pourvu de rainures de verrouillage A, et un corps interne 102B qui est monté à l'intérieur du corps principal 102A de manière coaxiale et qui est relié à une canalisation C102. Le corps interne 102B est fixé sur une portion intérieure 128 du corps principal 102A et délimite un passage longitudinal 120. Le corps interne 102B forme un siège 121 d'une soupape 123 de l'about 102. Un espace annulaire E102 est prévu radialement entre le corps principal 102A et le corps interne 102B, en particulier au niveau axial des portions de verrouillage A2 des rainures de verrouillage A.

Le corps 104 comprend un corps principal 104A, pourvu de rainures de guidage B, et un corps interne 104B monté à l'intérieur du corps principal 104A de manière coaxiale. Le corps interne 104B est relié à une canalisation C103. Le corps interne 104B est fixé sur une portion intérieure 148 du corps principal 104A. Le corps interne 104B forme le siège 141 de la soupape 143 de l'embout 103 et délimite un canal 130. Le corps principal 104A est pourvu de pions de verrouillage D qui coopèrent avec les rainures de verrouillage A du corps principal 102A de l'about 102. Un espace annulaire E104 est prévu radialement entre le corps principal 104A et le corps interne 104B, en particulier au niveau axial des pions de pions de verrouillage D.

La bague 105 est pourvue de pions de guidage C, non visibles sur la figure 9, qui coopèrent avec les rainures de guidage B du corps 104.

Le mécanisme d'accouplement et de désaccouplement du raccord 101 est similaire à celui du raccord 1, avec la coopération des pions C et D avec les rainures A et B.

Lorsque le raccord 101 est en configuration accouplée et qu'un liquide s'écoule entre les canalisations C102 et C103, le liquide circule dans les corps internes 102B et 104B et les espaces annulaires E102 et E104 assurent une isolation thermique entre le corps principal 104A du corps 104 et le fluide, ainsi qu'entre le corps principal 102A de l'about 102 et le fluide.

Moins de givre a donc tendance à se former entre les éléments du raccord 101 puisque les corps internes 102B et 104B sont éloignés radialement des corps principaux 102A et 104A, notamment à proximité des contacts de verrouillage. Les efforts de déverrouillage à exercer seront donc diminués par rapport à ceux requis pour le raccord des figures 1 à 8.

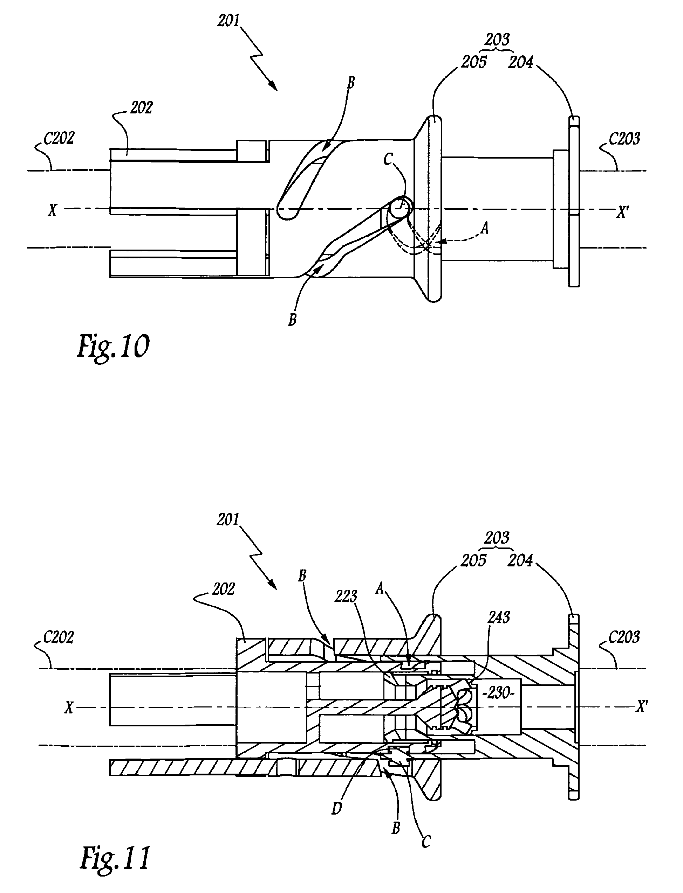

Les figures 10 et 11 montrent un raccord 201, conforme à un troisième mode de réalisation de l'invention, qui comprend un about 202 et un embout 203, reliés respectivement à des canalisations C202 et C203. Dans le troisième mode de réalisation, les éléments similaires à ceux du premier mode de réalisation portent les mêmes références numériques, augmentées de 200.

Dans la suite, on ne décrit pas en détail les éléments du raccord 201 qui sont similaires à ceux du raccord 1.

L'embout 203 présente un canal 230 et comprend un corps 204 et une bague 205. Le corps 204 porte à la fois des pions de verrouillage D internes et des pions de guidage C externes. Chaque pion de guidage C est aligné radialement avec un pion de verrouillage D. Les pions de guidage C coopèrent avec des rainures de guidage B internes de la bague 205 et les pions de verrouillage D coopèrent avec des rainures de verrouillage A externes de l'about 202.

L'about 202 loge une soupape 223 repoussée par défaut contre son siège en position d'étanchéité au moyen d'un ressort non représenté. De la même manière, le corps 204 loge une soupape 243 repoussée par défaut contre son siège en position d'étanchéité au moyen d'un ressort non représenté.

L'embout 3 est conçu pour qu'en configuration rétractée de l'embout 3 et dans la configuration désaccouplée du raccord 1, avec la bague 5 en butée contre le corps 4 de l'embout 3, l'about 2 puisse être inséré dans l'embout 3. Ainsi, la position rétractée de l'embout 3 autorise simultanément l'insertion des tenons 51 dans les encoches 26B et l'insertion des pions de verrouillage D dans les portions d'entrée A11 des rainures de verrouillage A. La position angulaire du corps 4 par rapport à la bague 5, en configuration rétractée de l'embout 3, est définie par la liaison entre les pions de guidage C et les portions proximales B2 des rainures de guidage B. Pour ce faire, les portions proximales B2 n'ont pas une direction intégralement circonférentielle et présentent une composante axiale non nulle. En variante, la rainure de guidage présente plus de deux portions d'inclinaisons différentes avec au moins une portion distale orientée tel que décrit pour la portion distale B1 et une portion proximale orientée tel que décrit pour la portion proximale B2.

En variante, l'agencement en spire de la canalisation attachée à l'embout peut être remplacé par toute autre disposition non rectiligne d'une partie de la canalisation par rapport à l'axe X-X', accordant une possibilité d'écartement axial entre le corps d'embout et la canalisation dans sa partie opposée à l'embout par rapport à la partie non rectiligne de la canalisation.

En variante, seul l'un des deux éléments de raccord loge une soupape assurant l'étanchéité de la canalisation reliée à cet élément de raccord en configuration déconnectée du raccord, l'effort élastique exercé sur cette soupape s'opposant au rapprochement entre les deux éléments de raccord en configuration accouplée, garantissant ainsi la stabilité de la configuration accouplée.

Dans tous les modes de réalisation, la géométrie des rainures de guidage sont adaptées à la géométrie des rainures de verrouillage de manière à permettre au corps du premier élément de se déplacer selon son mouvement combiné de translation et de rotation par rapport au deuxième élément et de se déplacer selon son mouvement combiné de translation et de rotation par rapport à la bague, alors que la bague et le deuxième élément sont liés en rotation.

Dans le cadre de l'invention, les différents modes de réalisation et les variantes de l'invention peuvent être combinés entre eux, au moins partiellement.

## Revendications

1. Raccord (1 ; 101 ; 201) pour la jonction amovible de deux canalisations (C2, C3 ; C102, C103 ; C202, C203) de fluide, le raccord (1 ; 101 ; 201) s'étendant longitudinalement le long d'un axe (X-X') et comprenant un premier élément (3 ; 103 ; 203) et un deuxième élément (2 ; 102 ; 202) propres à s'emboîter l'un dans l'autre, le premier élément (3 ; 103 ; 203) comprenant un corps (4 ; 104 ; 204) délimitant un canal (30 ; 130, 230) de passage du fluide qui s'étend axialement (X-X'), l'un au moins parmi le premier élément (3 ; 103 ; 203) et le deuxième élément (2 ;102 ; 202) étant équipé d'une soupape (23, 43 ; 123, 143 ; 223, 243) et d'un organe élastique de rappel (25, 45) de la soupape (23, 43 ;123, 143) en position d'étanchéité, chaque soupape (23, 43 ; 123, 143 ; 223, 243) assurant l'étanchéité fluidique de l'élément (2, 3 ; 102, 203 ; 202, 203) lorsque le raccord (1 ; 101 ; 201) est en configuration désaccouplée et laissant le fluide s'écouler dans le canal ( 30 ; 130 ; 230) lorsque le raccord (1 ; 101 ; 201) est en configuration accouplée (figure 5), le deuxième élément (2 ; 102 ; 202) et le corps (4 ; 104 ; 204) étant liés, lorsque le deuxième élément (2 ; 102 ; 202) et le premier élément (3 ; 103 ; 203) sont emboités au moins partiellement l'un dans l'autre, selon un mouvement relatif combiné de rotation et de translation, selon l'axe (X-X'), par une première liaison entre au moins un pion de verrouillage (D) et au moins une rainure de verrouillage (A) qui comprend une portion d'entrée (A1) et une portion de verrouillage (A2), le corps (4 ; 104 ; 204) adoptant, dans la configuration accouplée du raccord (1 ; 101 ; 201) (figure 5), une position axiale de verrouillage par rapport au deuxième élément (2 ; 102 ; 202), la première liaison étant, d'une part, telle que le corps (4 ; 104 ; 204) dépasse sa position axiale de verrouillage par rapport au deuxième élément (2 ; 102 ; 202) pour engager le pion de verrouillage (D) dans la portion de verrouillage (A2) de la rainure de verrouillage (A) au cours de l'accouplement et, d'autre part, apte à verrouiller axialement le deuxième élément (2 ; 102 ; 202) par rapport au corps (4 ; 104 ; 204) du premier élément (3 ; 103 ; 203) lorsque le raccord (1 ; 101 ; 201) est en configuration accouplée (figure 5) et que le pion de verrouillage (D) coopère avec la portion de verrouillage (A2), l'organe élastique de rappel (25, 45) de chaque soupape (23, 43 ;123,143 ; 223, 243) s'opposant alors au rapprochement axial entre le deuxième élément (2 ; 102 ; 202) et le corps (4 ; 104 ; 204),
**caractérisé en ce que** le premier élément (3 ; 103 ; 203) comprend une unique bague (5 ; 105 ; 205) montée autour du corps (4 ; 104 ; 204), le corps (4 ; 104 ; 204) et la bague (5 ; 105 ; 205) étant liés selon un mouvement relatif combiné de rotation et de translation selon l'axe (X-X') par une deuxième liaison entre au moins un pion de guidage (C) et au moins une rainure de guidage (B),
**en ce que**, lorsque le deuxième élément (2 ; 102 ; 202) et le premier élément (3 ; 103 ; 203) sont emboités au moins partiellement l'un dans l'autre, le deuxième élément (2 ; 102 ; 202) et la bague (5 ; 105 ; 205) sont mobiles en translation et liés en rotation l'un par rapport à l'autre selon l'axe (X-X'),
**en ce que**, en configuration accouplée du raccord (1 ; 101 ; 201), le pion de guidage (C) est disposé dans la rainure de guidage (B),
**en ce que**, lorsque le raccord (1 ; 101 ; 201) est dans la configuration accouplée (figure 5) et que la bague (5 ; 105 ; 205) est déplacée par rapport au corps (4 ; 104 ; 204) selon l'axe (X-X'), à l'opposé du deuxième élément (2 ; 102 ; 202), le raccord (1 ; 101 ; 201) adopte une configuration dans laquelle le pion de verrouillage (D) est disposé hors de la portion de verrouillage (A2) de la rainure de verrouillage (A).

2. Raccord (1 ; 101 ; 201) selon la revendication précédente, **caractérisé en ce qu'**un premier angle (αB1) entre, d'une part, un axe géométrique (ZB1) d'une première portion (B1) de la rainure de guidage (B) dans laquelle est disposé le pion de guidage (C) en configuration accouplée du raccord (1 ; 101 ; 201) et, d'autre part, un premier plan (P2) qui passe par l'axe (X-X'), qui s'étend selon une direction radiale par rapport à l'axe (X-X') et qui coupe la première portion (B1) de la rainure de guidage (B), est inférieur d'au moins 15°, de préférence de 45°, à un deuxième angle (αA2) entre, d'une part, un axe géométrique (ZA2) de la portion de verrouillage (A2) de la rainure de verrouillage (A) et, d'autre part, un deuxième plan (P1), qui passe par l'axe (X-X'), s'étend selon une direction radiale par rapport à l'axe (X-X') et coupe la portion de verrouillage (A2) de la rainure de verrouillage (A)

3. Raccord (1 ; 101 ; 201) selon la revendication 2, **caractérisé en ce que** le premier angle (αB1) est compris entre 20 ° et 40°.

4. Raccord (1 ; 101 ; 201) selon l'une des revendications précédentes, **caractérisé en ce que**, lorsque le raccord (1 ; 101 ; 201) est en configuration désaccouplée et que le premier élément (3 ; 103 ; 203) est dans une configuration rétractée, dans laquelle la bague (5 ; 105 ; 205) est reculée axialement par rapport au corps (4 ; 104 ; 204), à l'opposé de l'extrémité distale (E42) du corps (4 ; 104 ; 204), le pion de guidage (C) est disposé dans la rainure de guidage (B).

5. Raccord (1 ; 101 ; 201) selon les revendications 2 et 4, **caractérisé en ce que** chaque rainure de guidage (B) comprend également une deuxième portion (B2) inclinée par rapport à l'axe (X-X') avec laquelle le pion de guidage (C) coopère en configuration désaccouplée du raccord (1 ; 101 ; 201) et **en ce qu'**un troisième angle (αB2) entre, d'une part, un axe géométrique (ZB2) de la deuxième portion (B2) de la rainure de guidage (B) et, d'autre part, le premier plan (P2), est compris entre la valeur du premier angle (αB1) et 80°, de préférence égal à 60 °.

6. Raccord (1 ; 101 ; 201) selon la revendication 2, **caractérisé en ce que** lorsque le pion de guidage (C) coopère avec la première portion (B1) de la rainure de guidage (B), le corps (4 ; 104 ; 204) a atteint ou dépasse sa position axiale de verrouillage par rapport au deuxième élément (2 ; 102 ; 202).

7. Raccord (1 ; 101) selon l'une des revendications précédentes, **caractérisé en ce que** le pion de verrouillage (D) est ménagé sur une surface radiale interne (S44) d'une partie distale (44) du corps (4 ; 104) du premier élément (3 ; 103).

8. Raccord (1 ; 101) selon l'une des revendications précédentes, **caractérisé en ce que** le pion de guidage (C) est ménagé sur une surface radiale interne (S52) d'une partie proximale (52) de la bague (5 ; 105).

9. Raccord (201) selon l'une des revendications 1 à 6, **caractérisé en ce que** le corps (204) porte à la fois les pions de guidage (C) et de verrouillage (D).

10. Raccord (1 ; 101 ; 201) selon l'une des revendications précédentes, **caractérisé en ce que** le corps (4 ; 104 ; 204) comporte une butée (42A) qui limite le mouvement axial de la bague (5 ; 105 ; 205) à l'opposé d'une extrémité distale (E42) du corps (4 ; 104 ; 204).

11. Raccord (1 ; 101 ; 201) selon la revendication 10, **caractérisé en ce qu'**un élément de rappel élastique est intercalé axialement entre le corps (4 ; 104 ; 204) du premier élément (3 ; 103 ; 203) et la bague (5 ; 105 ; 205) et **en ce que** l'élément élastique est apte à repousser la bague (5 ; 105 ; 205) contre la butée (42A).

12. Raccord (1 ; 101 ; 201) selon l'une des revendications précédentes, **caractérisé en ce que** le corps (4 ; 104 ; 204) comporte une butée (44A) qui limite le mouvement axial de la bague (5 ; 105 ; 205) en direction d'une extrémité distale (E42) du corps (4 ; 104 ; 204).

13. Raccord (1 ; 101 ; 201) selon l'une des revendications précédentes, **caractérisé en ce que** la bague (5 ; 105 ; 205) est pourvue de tenons (51), **en ce que** le deuxième élément (2 ; 102 ; 202) est pourvu d'encoches (26B) et **en ce que** lorsque le premier élément (3 ; 103 ; 203) et le deuxième élément (2 ; 102 ; 202) sont emboités au moins partiellement l'un dans l'autre, les encoches (26B) coopèrent avec les tenons (51), ce qui bloque la rotation, autour de l'axe (X-X'), du deuxième élément (2 ; 102 ; 202) par rapport à la bague (5 ; 105 ; 205).

14. Raccord (1 ; 101 ; 201) selon l'une des revendications précédentes, **caractérisé en ce que** la bague (5 ; 105 ; 205) est pourvue de trous (53) qui mettent en communication une surface externe (S42) du corps (4 ; 104 ; 204) avec l'extérieur du raccord (1 ; 101 ; 201).

15. Raccord (101) selon l'une des revendications précédentes, **caractérisé en ce que** le corps (104) du premier élément (103) est formé d'un corps interne (104B) délimitant un canal (130) pour le fluide et d'un corps principal (104A) coaxiaux et solidaires et **en ce que** le deuxième élément (102) est formé d'un corps interne (102B) délimitant un passage (120) pour le fluide et d'un corps principal (102A) coaxiaux et solidaires, la liaison entre le pion de verrouillage (D) et la rainure de verrouillage (A) étant réalisée au niveau des corps principaux (1 04A ; 102A), les corps internes (104B, 102B) et les corps principaux (104A ;102A) du premier (103) et du deuxième élément (102) étant séparés par un espace annulaire (E102, E104).

16. Raccord (1 ; 101 ; 201) selon l'une des revendications précédentes, **caractérisé en ce qu'**au moins un câble (6) relie la bague (5) à la canalisation (C3 ; C103 ; C203) du premier élément (3 ; 103 ; 203), **en ce qu'**au moins une partie de la canalisation (C3 ; C103 ; C203) du premier élément (3 ; 103 ; 203) est disposée de manière non parallèle à l'axe X-X' et **en ce que** le câble (6) est accroché sur la canalisation (C3 ; C103 ; C203) du côté opposé au premier élément (3 ; 103 ; 203) par rapport à la partie de la canalisation (C3 ;C103 ;C203) non parallèle à l'axe X-X'.

## Patentansprüche

1. Kupplung (1; 101; 201) für die lösbare Verbindung von zwei Fluid-Rohrleitungen (C2, C3; C102, C103; C202, C203), wobei die Kupplung (1; 101; 201) sich in Längsrichtung entlang einer Achse (X-X') erstreckt und ein erstes Element (3; 103; 203) und ein zweites Element (2; 102; 202) umfasst, die geeignet sind, ineinanderzugreifen, wobei das erste Element (3; 103; 203) einen Körper (4; 104; 204) umfasst, der einen sich axial (X-X') erstreckenden Kanal (30; 130; 230) für den Durchgang des Fluids begrenzt, mindestens eines von dem ersten (3; 103; 203) und dem zweiten (2; 102; 202) Element mit einem Ventil (23, 43; 123, 143; 223, 243) und einem elastischen Organ (25, 45) zum Rückstellen des Ventils (23, 43; 123, 143) in die Dichtposition ausgerüstet ist, wobei jedes Ventil (23, 43; 123, 143; 223, 243) die Fluiddichtigkeit des Elements (2, 3; 102, 203; 202, 203) sicherstellt, wenn die Kupplung (1; 101; 201) in der entkuppelten Stellung ist, und das Fluid in den Kanal (30; 130; 230) strömen lässt, wenn die Kupplung (1; 101; 201) in der gekuppelten Stellung (Figur 5) ist, das zweite Element (2; 102; 202) und der Körper (4; 104; 204) über eine erste Verbindung zwischen mindestens einem Verriegelungsstift (D) und mindestens einer Verriegelungsnut (A), die einen Eintrittsbereich (A1) und einen Verriegelungsbereich (A2) umfasst, verbunden sind, wenn das zweite Element (2; 102; 202) und das erste Element (3; 103; 203) zumindest teilweise gemäß einer kombinierten Relativbewegung der Rotation und der Translation gemäß der Achse (X-X') ineinandergreifen, der Körper (4; 104; 204) in der gekuppelten Stellung der Kupplung (1; 101; 201) (Figur 5) eine axiale Verriegelungsposition in Bezug auf das zweite Element (2; 102; 202) einnimmt, die erste Verbindung einerseits derart ist, dass der Körper (4; 104; 204) seine axiale Verriegelungsposition in Bezug auf das zweite Element (2; 102; 202) überschreitet, damit der Verriegelungsstift (D) in den Verriegelungsbereich (A2) der Verriegelungsnut (A) während des Kuppelvorgangs eingreift, und andererseits geeignet ist, axial das zweite Element (2; 102; 202) in Bezug auf den Körper (4; 104; 204) des ersten Elements (3; 103; 203) zu verriegeln, wenn die Kupplung (1; 101; 201) in der gekuppelten Stellung (Figur 5) ist und der Verriegelungsstift (D) mit dem Verriegelungsbereich (A2) zusammenarbeitet, wobei das elastische Rückstellorgan (25, 45) jedes Ventils (23, 43; 123, 143; 223; 243) sich dann dem axialen Annähern zwischen dem zweiten Element (2; 102; 202) und dem Körper (4; 104; 204) entgegenstellt,
**dadurch gekennzeichnet, dass** das erste Element (3; 103; 203) einen einzigen Ring (5; 105; 205) umfasst, der um den Körper (4; 104; 204) montiert ist, wobei der Körper (4; 104; 204) und der Ring (5; 105; 205) gemäß einer kombinierten Relativbewegung der Rotation und der Translation gemäß der Achse (X-X') durch eine zweite Verbindung zwischen mindestens einem Führungsstift (C) und mindestens einer Führungsnut (B) verbunden sind,
dass das zweite Element (2; 102; 202) und der Ring (5; 105; 205) zueinander gemäß der Achse (X-X') translatorisch beweglich und rotatorisch verbunden sind, wenn das zweite Element (2; 102; 202) und das erste Element (3; 103; 203) zumindest teilweise ineinandergreifen,
dass in der gekuppelten Stellung der Kupplung (1; 101; 201) der Führungsstift (C) in der Führungsnut (B) angeordnet ist,
dass die Kupplung (1; 101; 201) eine Stellung einnimmt, in der der Verriegelungsstift (D) außerhalb des Verriegelungsbereichs (A2) der Verriegelungsnut (A) angeordnet ist, wenn die Kupplung (1; 101; 201) in der gekuppelten Stellung (Figur 5) ist und der Ring (5; 105; 205) in Bezug auf den Körper (4; 104; 204) gemäß der Achse (X-X') entgegengesetzt zum zweiten Element (2; 102; 202) verschoben ist.

2. Kupplung (1; 101; 201) nach dem vorhergehenden Anspruch, **dadurch gekennzeichnet, dass** ein erster Winkel (αB1) zwischen der geometrischen Achse (ZB1) eines ersten Bereichs (B1) der Führungsnut (B), in der der Führungsstift (C) in der gekuppelten Stellung der Kupplung (1; 101; 201) angeordnet ist, einerseits und einer ersten Ebene (P2), die durch die Achse (X-X') geht, die sich gemäß einer radialen Richtung in Bezug auf die Achse (X-X') erstreckt und die den ersten Bereich (B1) der Führungsnut (B) schneidet, andererseits um mindestens 15°, vorzugsweise um 45°, kleiner ist als ein zweiter Winkel (αA2) zwischen einer geometrischen Achse (ZA2) des Verriegelungsbereichs (A2) der Verriegelungsnut (A) einerseits und einer zweiten Ebene (P1), die durch die Achse (X-X') geht, sich gemäß einer radialen Richtung in Bezug auf die Achse (X-X') erstreckt und den Verriegelungsbereich (A2) der Verriegelungsnut (A) schneidet, andererseits.

3. Kupplung (1; 101; 201) nach Anspruch 2, **dadurch gekennzeichnet, dass** der erste Winkel (αB1) zwischen 20° und 40° liegt.

4. Kupplung (1; 101; 201) nach einem der vorhergehenden Ansprüche, **dadurch gekennzeichnet, dass**, wenn die Kupplung (1; 101; 201) in der entkuppelten Stellung ist und das erste Element (3; 103; 203) in einer zurückgezogenen Stellung ist, in der der Ring (5; 105; 205) axial in Bezug auf den Körper (4; 104; 204) entgegengesetzt zu dem distalen Ende (E42) des Körpers (4; 104; 204)zurückgesetzt ist, der Führungsstift (C) in der Führungsnut (B) angeordnet ist.

5. Kupplung (1; 101; 201) nach den Ansprüchen 2 und 4, **dadurch gekennzeichnet, dass** jede Führungsnut (B) gleichfalls einen in Bezug auf die Achse (X-X') geneigten zweiten Bereich (B2) umfasst, mit dem der Führungsstift (C) in der entkoppelten Stellung der Kupplung (1; 101; 201) zusammenarbeitet, und dass ein dritter Winkel (αB2) zwischen einer geometrischen Achse (ZB2) des zweiten Bereichs (B2) der Führungsnut (B) einerseits und der ersten Ebene (P2) andererseits zwischen dem Wert des ersten Winkels (αB1) und 80° liegt, vorzugsweise gleich 60° ist.

6. Kupplung (1; 101; 201) nach Anspruch 2, **dadurch gekennzeichnet, dass**, wenn der Führungsstift (C) mit dem ersten Bereich (B1) der Führungsnut (B) zusammenarbeitet, der Körper (4; 104; 204) seine axiale Verriegelungsposition in Bezug auf das zweite Element (2; 102; 202) erreicht hat oder über diese hinausgeht.

7. Kupplung (1; 101) nach einem der vorhergehenden Ansprüche, **dadurch gekennzeichnet, dass** der Verriegelungsstift (D) auf einer radialen Innenfläche (S44) eines distalen Teils (44) des Körpers (4; 104) des ersten Elements (3; 103) angeordnet ist.

8. Kupplung (1; 101) nach einem der vorhergehenden Ansprüche, **dadurch gekennzeichnet, dass** der Führungsstift (C) auf einer radialen Innenfläche (S52) eines proximalen Teils (52) des Ringes (5; 105) angeordnet ist.

9. Kupplung (201) nach einem der Ansprüche 1 bis 6, **dadurch gekennzeichnet, dass** der Körper (204) sowohl den Führungsstift (C) als auch den Verriegelungsstift (D) trägt.

10. Kupplung (1; 101; 201) nach einem der vorhergehenden Ansprüche, **dadurch gekennzeichnet, dass** der Körper (4; 104; 204) einen Anschlag (42A) aufweist, der die axiale Bewegung des Ringes (5; 105; 205) entgegengesetzt zu einem distalen Ende (E42) des Körpers (4; 104; 204) begrenzt.

11. Kupplung (1; 101; 201) nach Anspruch 10, **dadurch gekennzeichnet, dass** ein elastisches Rückstellelement axial zwischen dem Körper (4; 104; 204) des ersten Elements (3; 103; 203) und dem Ring (5; 105; 205) angeordnet ist und dass das elastische Element geeignet ist, den Ring (5; 105; 205) gegen den Anschlag (42A) zu drücken.

12. Kupplung (1; 101; 201) nach einem der vorhergehenden Ansprüche, **dadurch gekennzeichnet, dass** der Körper (4; 104; 204) einen Anschlag (44A) aufweist, der die axiale Bewegung des Ringes (5; 105; 205) in Richtung eines distalen Endes (E42) des Körpers (4; 104; 204) begrenzt.

13. Kupplung (1; 101; 201) nach einem der vorhergehenden Ansprüche, **dadurch gekennzeichnet, dass** der Ring (5; 105; 205) mit Zapfen (51) versehen ist, dass das zweite Element (2; 102; 202) mit Einschnitten (26B) versehen ist und dass, wenn das erste Element (3; 103; 203) und das zweite Element (2; 102; 202) zumindest teilweise ineinandergreifen, die Einschnitte (26B) mit den Zapfen (51) zusammenarbeiten, was die Drehung um die Achse (X-X') des zweiten Elements (2; 102; 202) in Bezug auf den Ring (5; 105; 205) blockiert.

14. Kupplung (1; 101; 201) nach einem der vorhergehenden Ansprüche, **dadurch gekennzeichnet, dass** der Ring (5; 105; 205) mit Löchern (53) versehen ist, die eine Außenfläche (S42) des Körpers (4; 104; 204) mit dem Äußeren der Kupplung (1; 101; 201) in Verbindung setzen.

15. Kupplung (101) nach einem der vorhergehenden Ansprüche, **dadurch gekennzeichnet, dass** der Körper (104) des ersten Elements (103) aus einem Innenkörper (104B), der einen Kanal (130) für das Fluid begrenzt, und einem Hauptkörper (104A) gebildet wird, die koaxial und miteinander verbunden sind, und dass das zweite Element (102) aus einem Innenkörper (102B), der einen Durchgang (120) für das Fluid begrenzt, und einem Hauptkörper (102A) gebildet wird, die koaxial und miteinander verbunden sind, wobei die Verbindung zwischen dem Verriegelungsstift (D) und der Verriegelungsnut (A) an den Hauptkörpern (104A; 102A) realisiert ist und die Innenkörper (104B, 102B) und die Hauptkörper (104A; 102) des ersten (103) und des zweiten Elements (102) durch einen ringförmigen Raum (E102, E104) getrennt sind.

16. Kupplung (1; 101; 201) nach einem der vorhergehenden Ansprüche, **dadurch gekennzeichnet, dass** mindestens ein Kabel (6) den Ring (5) mit der Rohrleitung (C3; C103; C203) des ersten Elements (3; 103; 203) verbindet, dass mindestens ein Teil der Rohrleitung (C3; C103; C203) des ersten Elements (3; 103; 203) in nicht parallel zur Achse (X-X') liegender Weise angeordnet ist und dass das Kabel (6) auf der Rohrleitung (C3; C103; C203) von der Seite entgegengesetzt zum ersten Element (3; 103; 203) in Bezug auf den nicht parallel zur Achse (X-X') liegenden Teil der Rohrleitung (C3; C103; C203) befestigt ist.

## Claims

1. A connector (1; 101; 201) for removably connecting two fluid channels (C2, C3; C102, C103; C202, C203), the connector (1; 101; 201) extending longitudinally along an axis (X-X') and comprising a first element (3; 103; 203) and a second element (2; 102; 202) that can fit into one another, the first element (3; 103; 203) comprising a body (4; 104; 204) delimiting a fluid passage channel (30; 130, 230) that extends axially (X-X'), at least one of the first element (3; 103; 203) and the second element (2;102; 202) being equipped with a valve (23, 43; 123, 143; 223, 243) and a resilient member (25, 45) for returning the valve (23, 43;123, 143) to the sealing position, each valve (23, 43; 123, 143; 223, 243) ensuring fluid sealing of the element (2, 3; 102, 203; 202, 203) when the connector (1; 101; 201) is in the disconnected configuration and allowing the fluid to flow in the channel (30; 130; 230) when the connector (1; 101; 201) is in the connected configuration (figure 5), the second element (2; 102; 202) and the body (4; 104; 204) being connected, when the second element (2; 102; 202) and the first element (3; 103; 203) are at least partially fitted in one another, following a combined rotational and translational relative movement, along the axis (X-X'), by a first connection between at least one locking pin (D) and at least one locking slot (A) that comprises an inlet portion (A1) and a locking portion (A2), the body (4; 104; 204) adopting, in the connected configuration of the connector (1; 101; 201) (figure 5), an axial locking position relative to the second element (2; 102; 202), the first connection being, on the one hand, such that the body (4; 104; 204) moves past its axial locking position relative to the second element (2; 102; 202) to engage the locking pin (D) in the locking portion (A2) of the locking slot (A) during the connection and, on the other hand, able to lock the second element (2; 102; 202) axially relative to the body (4; 104; 204) of the first element (3; 103; 203) when the connector (1; 101; 201) is in the connected configuration (figure 5) and the locking pin (D) cooperates with the locking portion (A2), the resilient return member (25, 45) of each valve (23, 43;123,143; 223, 243) then opposing the axial approach between the second element (2; 102; 202) and the body (4; 104; 204),
**characterized in that** the first element (3; 103; 203) comprises a single ring (5; 105; 205) mounted around the body (4; 104; 204), the body (4; 104; 204) and the ring (5; 105; 205) being connected in a combined relative rotational and translational movement along the axis (X-X') by a second connection between at least one guiding pin (C) and at least one guiding slot (B),
**in that**, when the second element (2; 102; 202) and the first element (3; 103; 203) are at least partially fitted into one another, the second element (2; 102; 202) and the ring (5; 105; 205) are translatable and rotationally connected relative to one another along the axis (X-X'),
**in that**, in the connected configuration of the connector (1; 101; 201), the guiding pin (C) is arranged in the guiding slot (B),
**in that**, when the connector (1; 101; 201) is in the connected configuration (figure 5) and the ring (5; 105; 205) is moved relative to the body (4; 104; 204) along the axis (X-X'), opposite the second element (2; 102; 202), the connector (1; 101; 201) adopts an intermediate connected configuration, in which the locking pin (D) is positioned outside the locking portion (A2) of the locking slot (A).

2. The connector (1; 101; 201) according the preceding claim, **characterized in that** a first angle (αB1) between a geometric axis (ZB1) of a first portion (B1) of the guiding slot (B), in which the guiding pin (C) is positioned in the connected position of the connector (1; 101; 201), on the one hand, and a first plane (P2) that passes through the axis (X-X'), which extends in a radial direction relative to the axis (X-X') and which intersects the first portion (B1) of the guiding slot (B), on the other hand, is smaller by at least 15°, preferably 45°, than a second angle (αA2) between a geometric axis (ZA2) of the locking portion (A2) of the locking slot (A) on the one hand, and a second plane (P1) that passes through the axis (X-X'), extends in a radial direction relative to the axis (X-X'), and intersects the locking portion (A2) of the locking slot (A), on the other hand.

3. The connector (1; 101; 201) according to claim 2, **characterized in that** the first angle (αB1) is comprised between 20° and 40°.

4. The connector (1; 101; 201) according to one of the preceding claims, **characterized in that**, when the connector (1; 101; 201) is in the disconnected configuration and the first element (3; 103; 203) is in a retracted configuration, in which the ring (5; 105; 205) is axially retracted relative to the body (4; 104; 204), opposite the distal end (E42) of the body (4; 104; 204), the guiding pin (C) is positioned in the guiding slot (B).

5. The connector (1; 101; 201) according to claims 2 and 4, **characterized in that** each guiding slot (B) also comprises a second portion (B2) inclined relative to the axis (X-X') with which the guiding pin (C) cooperates in the detached configuration of the connector (1; 101; 201) and **in that** a third angle (αB2) between a geometric axis (ZB2) of the second portion (B2) of the guiding slot (B) on the one hand, and the first plane (P2) on the other hand, is comprised between the value of the first angle (αB1) and 80°, preferably equal to 60°.

6. The connector (1; 101; 201) according to claim 2, **characterized in that** when the guiding pin (C) cooperates with the first portion (B1) of the guiding slot (B), the body (4; 104; 204) reaches or exceeds its axial locking position relative to the second element (2; 102; 202).

7. The connector (1; 101) according to one of the preceding claims, **characterized in that** the locking pin (D) is formed on an inner radial surface (S44) of a distal part (44) of the body (4; 104) of the first element (3; 103).

8. The connector (1; 101) according to one of the preceding claims, **characterized in that** the guiding pin (C) is formed on an inner radial surface (S52) of a proximal part (52) of the ring (5; 105).

9. The connector (201) according to one of claims 1 to 6, **characterized in that** the body (204) bears both the guiding (C) and the locking (D) pins.

10. The connector (1; 101; 201) according to one of the preceding claims, **characterized in that** the body (4; 104; 204) includes a stop (42A) that limits the axial movement of the ring (5; 105; 205) opposite a distal end (E42) of the body (4; 104; 204).

11. The connector (1; 101; 201) according to claim 10, **characterized in that** a resilient return member is axially inserted between the body (4; 104; 204) of the first element (3; 103; 203) and the ring (5; 105; 205) and **in that** the resilient element can push the ring (5; 105; 205) back against the stop (42A).

12. The connector (1; 101; 201) according to one of the preceding claims, **characterized in that** the body (4; 104; 204) includes a stop (44A) that limits the axial movement of the ring (5; 105; 205) toward a distal end (E42) of the body (4; 104; 204).

13. The connector (1; 101; 201) according to one of the preceding claims, **characterized in that** the ring (5; 105; 205) is provided with posts (51), **in that** the second element (2; 102; 202) is provided with notches (26B), **in that** when the first element (3; 103; 203) and the second element (2; 102; 202) are at least partially fitted into one another, the notches (26B) cooperate with the posts (51), which blocks the rotation around the axis (X-X') of the second element (2; 102; 202) relative to the ring (5; 105; 205).

14. The connector (1; 101; 201) according to one of the preceding claims, **characterized in that** the ring (5; 105; 205) is provided with holes (53) that put an outer surface (S42) of the body (4; 104; 204) in communication with the outside of the connector (1; 101; 201).

15. The connector (101) according to one of the preceding claims, **characterized in that** the body (104) of the first element (103) is made up of an inner body (104B) defining a channel (130) for the fluid and a main body (104A) that are coaxial and integral, and **in that** the second element (102) is made up of an inner body (102B) defining a passage (120) for the fluid and a main body (102A) that are coaxial and integral, the connection between the locking pin (D) and the locking slot (A) being made at the main bodies (104A; 102A), the inner bodies (104B, 102B) and the main bodies (104A; 102A) of the first (103) and second (102) elements being separated by an annular space (E102, E104).

16. The connector (1; 101; 201) according to one of the preceding claims, **characterized in that** at least one cable (6) connects the ring (5) to the channel (C3; C103; C203) of the first element (3; 103; 203), **in that** at least part of the channel (C3; C103; C203) of the first element (3; 103; 203) is not parallel to the axis X-X' and **in that** the cable (6) is fastened on the channel (C3; C103; C203) on the side opposite the first element (3; 103; 203) relative to the part of the channel (C3; C103; C203) not parallel to the axis X-X'.
